# DEMANDE DE BREVET EUROPEEN

(11) **EP 3 640 480 A1**
(43) Date de publication de la demande: **22.04.2020**
(21) Numéro de dépôt: 19202223.4
(22) Date de dépôt: 09.10.2019
(51) Int. Cl.: F04C 2/10, F04C 14/02, F01D 25/20, F04D 13/12

(54) **ENSEMBLE POMPE D'UN GROUPE DE LUBRIFICATION D'UNE TURBOMACHINE D'AÉRONEF COMPRENANT UN GÉNÉRATEUR PIÉZOÉLECTRIQUE**

(30) Priorité: 17.10.2018 BE 201805710
(71) Demandeur: Safran Aero Boosters S.A., 4041 Herstal (BE)
(72) Inventeur: CHENOUX, Mathieu, 4041 Herstal (BE)
(74) Mandataire: Gevers Patents

(57) **Abrégé**

L'invention concerne un ensemble pompe (ou empilage de pompes) d'un groupe de lubrification d'une turbomachine d'aéronef comprenant :
- un empilement de pompes à huile (3) et de flasques (4) agencés autour d'un arbre (5) dans un espace intérieur à un carter (6) ;
- des moyens de compression (2) disposés entre deux des flasques (4) et configuré pour comprimer l'empilement dans l'espace intérieur au carter (6) ; et
- au moins un générateur piézoélectrique (1) au niveau des moyens de compression (2).

## Description

### Domaine technique

La présente invention concerne un ensemble pompe d'un groupe de lubrification d'une turbomachine d'aéronef.

### Art antérieur

De nos jours, une turbomachine d'aéronef comprend des équipements qui sont munis de systèmes, par exemple, des systèmes d'instrumentation ou de surveillance, nécessitant une alimentation en énergie, par exemple, en énergie électrique, au moyen d'une source d'énergie telle qu'un générateur ou une pile.

### Résumé de l'invention

Un objet de l'invention est fournir une source d'énergie plus économique et moins coûteuse à certains de ces systèmes.

À cet effet, l'invention propose un ensemble pompe (ou empilage de pompes) pour un groupe de lubrification d'une turbomachine d'aéronef comprenant :
- un arbre allongé le long d'un axe ;
- un carter s'étendant autour de l'arbre, et comprenant au moins une ouverture agencée pour accueillir l'arbre ;
- une pluralité de pompes à huile empilées le long de l'arbre, dans un espace intérieur au carter,
chacune des pompes à huile étant agencée autour de l'arbre ;
- une pluralité de flasques empilés le long de l'arbre dans l'espace intérieur au carter,
chacun des flasques étant agencé autour de l'arbre ;
chacune des pompes à huile étant séparée des autres pompes à huile par au moins deux des flasques disposés de part et d'autre de la chacune des pompes à huile ;
- des moyens de compression, de préférence adjacents à au moins un des flasques, préférentiellement disposés entre deux des flasques, et configurés pour comprimer un empilement constitué par les pompes à huile et les flasques dans l'espace intérieur au carter ;
- au moins un générateur piézoélectrique au niveau des moyens de compression.
De préférence, les moyens de compression sont couplés mécaniquement à au moins un flasque.

Un ensemble pompe comprenant un empilement de pompes à huile et de flasques est connu d'un homme du métier et consiste classiquement une pièce essentielle d'un groupe de lubrification d'une turbomachine d'aéronef. L'invention propose de modifier un tel ensemble pompe de façon à introduire au moins un générateur piézoélectrique au niveau de moyens de compression de l'empilement. Ainsi, à chaque pulsation des pompes à huile, les moyens de compression, et donc le au moins un générateur piézoélectrique, sont comprimés, ce qui permet de produire un courant électrique qui peut être récupéré comme une source d'énergie pour des systèmes d'instrumentation et/ou de surveillance d'équipements de la turbomachine d'aéronef. Cette énergie électrique issue de la compression des moyens de compression est produite dans le fonctionnement naturel d'un ensemble pompe. Le au moins un générateur piézoélectrique permet avantageusement de récupérer cette énergie plutôt qu'elle ne soit dissipée dans un système mécanique. L'invention fournit donc une source d'énergie plus économique et moins coûteuse pour des systèmes susmentionnés.

Avantageusement, l'ensemble pompe selon l'invention permet une récolte d'énergie tirée de pulsation des pompes à huile sur les moyens de compression, qui peut être accumulées pour servir au fonctionnement autonome d'équipement de la turbomachine d'aéronef et/ou de systèmes d'instrumentation et/ou de surveillance de ces équipements qui sont situés à proximité du groupe de lubrification, à basse consommation.

Avantageusement, l'ensemble pompe selon l'invention permet une alimentation en énergie indépendante d'un alternateur à aimants permanents (PMG) de l'aéronef, ce qui permet une autonomie énergétique des équipements et/ou des systèmes d'instrumentation et/ou de surveillance.

Dans le cadre du présent document, un groupe de lubrification d'une turbomachine d'aéronef comprend un ou plusieurs ensembles pompes, préférentiellement des ensembles pompes selon l'invention, et des tuyaux pour faire circuler de l'huile, entre autre, d'un réservoir d'huile à la turbomachine. Le groupe de lubrification joue un rôle central dans la lubrification de la turbomachine. En particulier, il pompe de l'huile dans le réservoir d'huile pour la projeter dans des roulements et/ou des structures d'engrenages de la turbomachine, avant de réacheminer cet huile vers le réservoir d'huile.

Préférentiellement, au moins une des pompes à huile consiste en une pompe volumétrique. Plus préférentiellement, chacune des pompes à huile consistent en une pompe volumétrique. Plus préférentiellement encore, chacune des pompes à huile consistent en une pompe gérotor. Une pompe gérotor est connue d'un homme du métier. Elle comprend un rotor interne préférentiellement trochoïdal, tournant autour d'un premier axe et d'un nombre de dents plus grand que deux, et un rotor externe préférentiellement formé d'un cercle avec des arcs circulaires entrecroisés, tournant autour d'un deuxième axe distinct du premier axe, et du nombre augmenté de un de dents. Les volumes délimités entre les deux rotors en rotation changent de façon dynamique et permet une pulsation d'huile. L'usage des termes « premier » et « deuxième » dans ce document servent uniquement à différencier les différents éléments et n'impliquent pas d'ordre entre ces éléments.

Le carter s'étend de préférence essentiellement symétriquement autour de l'arbre. Chacune des pompes à huile est de préférence d'une forme essentiellement annulaire agencée symétriquement autour de l'arbre. Chacun des flasques est de préférence d'une forme essentiellement annulaire agencée symétriquement autour de l'arbre.

Préférentiellement, chacune des pompes à huile est intercalée entre deux flasques. Un flasque est connu d'un homme du métier et comprend préférentiellement deux ouvertures dirigées selon l'axe et consistant en des bassins d'alimentation en huile communiquant avec des orifices coaxiaux du carter, un bassin d'alimentation de haute pression et un bassin d'alimentation de basse pression.

Préférentiellement, les moyens de compression comprennent au moins un ressort et au moins un du au moins un générateur piézoélectrique est agencé au niveau du au moins un ressort.

Avantageusement, un ressort est un moyen de compression simple et peu coûteux pour la conception d'un ensemble pompe selon l'invention. L'agencement d'un générateur piézoélectrique au niveau d'un ressort est facile et peu couteux à réaliser, et permet une production rentable d'énergie électrique.

Préférentiellement, le moins un ressort consiste en une pluralité de ressorts agencés symétriquement autour de l'arbre entre :
- un premier des flasques adjacent à une pompe à huile d'alimentation des pompes à huile disposée dans une portion connexe de l'espace intérieur au carter comprenant l'ouverture ;
- un deuxième des flasques adjacent à une pompe à huile de récupération des pompes à huile disposée dans une autre portion connexe de l'espace intérieur ;
et en ce que le au moins un générateur piézoélectrique comprend une pluralité de générateurs piézoélectrique,
chacun des générateurs piézoélectriques étant agencé au niveau d'un des ressorts.

Préférentiellement, l'ensemble constitué des premier et deuxième flasque, ainsi que des ressorts et des générateurs piézoélectriques, sépare l'empilement en deux parties : une partie d'alimentation adjacente à l'ouverture axiale du carter et une partie de récupération. Plus préférentiellement, les ressorts compriment, d'une part, la partie d'alimentation en direction d'une première paroi du carter transverse à l'axe et comprenant l'ouverture, et d'autre part, la partie de récupération en direction d'une deuxième paroi du carter parallèle à la première paroi.

L'usage, dans le présent document, du verbe « comprendre » de ses variantes, ainsi que ses conjugaisons, ne peut en aucune façon exclure la présence d'éléments autres que ceux mentionnés. L'usage, dans le présent document, de l'article indéfini « un », « une », ou de l'article défini « le », « la » ou « l' », pour introduire un élément n'exclut pas la présence d'une pluralité de ces éléments.

La présente invention propose également un groupe de lubrification d'une turbomachine d'aéronef comprenant un ensemble pompe selon l'invention.

L'ensemble des modes de réalisation préférés ainsi que l'ensemble des avantages du système selon l'invention se transposent mutatis mutandis au présent groupe de lubrification.

La présente invention propose également un kit comprenant :
- un groupe de lubrification d'une turbomachine d'aéronef selon l'invention ;
- un système d'instrumentation et/ou de surveillance de paramètres de fonctionnement d'un équipement de la turbomachine d'aéronef ;
- une connexion électrique entre le au moins un générateur piézoélectrique et le système d'instrumentation et/ou de surveillance, pour alimenter au moins partiellement ce dernier en énergie électrique.

Préférentiellement, l'équipement consiste en le groupe de lubrification.

La présente invention propose également un kit comprenant :
- un groupe de lubrification d'une turbomachine d'aéronef selon l'invention ;
- une batterie ;
- une connexion électrique entre le au moins un générateur piézoélectrique et la batterie, pour alimenter la batterie en énergie électrique.

L'ensemble des modes de réalisation préférés ainsi que l'ensemble des avantages du système selon l'invention se transposent mutatis mutandis aux présents kits selon l'invention.

Préférentiellement, la batterie est configurée pour alimenter au moins partiellement un équipement de la turbomachine d'aéronef et/ou un système d'instrumentation et/ou de surveillance de paramètres de fonctionnement d'un équipement de la turbomachine d'aéronef en énergie électrique.

Avantageusement, l'énergie électrique produite par l'ensemble pompe selon l'invention peut être stockée dans la batterie pendant une certaine période préalablement à son utilisation afin d'alimenter l'équipement et/ou le système susmentionnés.

La batterie est préférentiellement une pile.

La présente invention propose également une turbomachine d'aéronef comprenant un des kits selon l'invention.

L'ensemble des modes de réalisation préférés ainsi que l'ensemble des avantages de l'ensemble pompe selon l'invention se transposent mutatis mutandis à la présente turbomachine.

### Brève description des figures

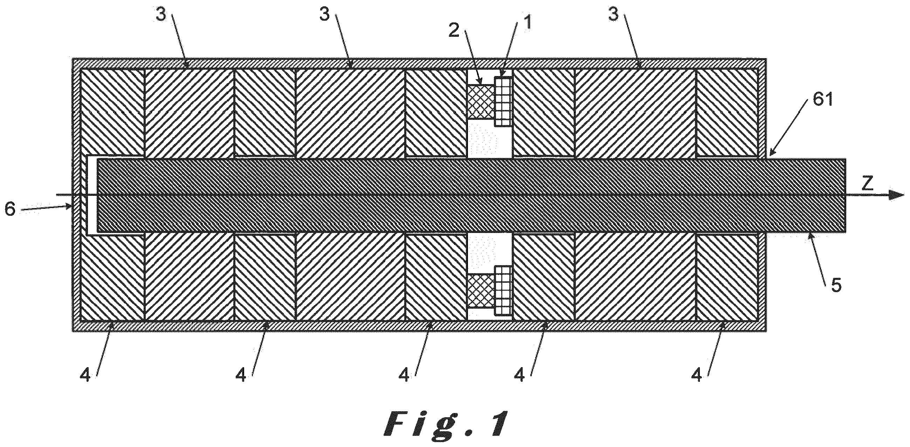

D'autres caractéristiques et avantages de la présente invention apparaîtront à la lecture de la description détaillée qui suit pour la compréhension de laquelle on se reportera à la figure 1 annexée illustrant une vue en coupe axiale d'un ensemble pompe un mode de réalisation préféré de l'invention.

Les dessins des figures ne sont pas à l'échelle. Généralement, des éléments semblables sont dénotés par des références semblables dans les figures. Dans le cadre du présent document, les éléments identiques ou analogues peuvent porter les mêmes références. En outre, la présence de numéros ou lettres de référence aux dessins ne peut être considérée comme limitative, y compris lorsque ces numéros ou lettres sont indiqués dans les revendications.

### Description détaillée de modes de réalisation particuliers de l'invention

La présente invention est décrite avec des réalisations particulières et des références à des figures mais l'invention n'est pas limitée par celles-ci. Les dessins ou figures décrits ne sont que schématiques et ne sont pas limitants.

La figure 1 illustre une vue en coupe axiale d'un ensemble pompe un mode de réalisation préféré de l'invention. L'ensemble pompe comprend
- un arbre 5 allongé le long d'un axe Z ;
- un carter 6 s'étendant essentiellement symétriquement autour de l'arbre 5, et comprenant au moins une ouverture 61 agencée pour accueillir l'arbre 5 ;
- une pluralité de pompes gérotor 3 empilées le long de l'arbre 5, dans un espace intérieur au carter 6,
chacune des pompes gérotor 3 étant d'une forme essentiellement annulaire agencée symétriquement autour de l'arbre 5 ;
- une pluralité de flasques 4 empilés le long de l'arbre 5 dans l'espace intérieur au carter 6,
chacun des flasques 4 étant d'une forme essentiellement annulaire agencée symétriquement autour de l'arbre 5 ;
chacune des pompes gérotor 3 étant séparée des autres pompes gérotor 3 par au moins deux des flasques 4 disposés de part et d'autre de la chacune des pompes gérotor 3 ;
- une pluralité de ressorts 2 agencés symétriquement autour de l'arbre 5 entre un premier des flasques 4 adjacent à une pompe gérotor d'alimentation à proximité de l'ouverture 61, et un deuxième des flasques 4 adjacent à une pompe gérotor de récupération
- une pluralité de générateurs piézoélectrique 1, chacun des générateurs piézoélectriques 1 étant agencé au niveau d'un des ressorts 2, chacun des ressorts 2 jouxtant un des générateurs piézoélectrique 1.
A chaque pulsation des pompes gérotor 3, en particulier des pompes gérotor d'alimentation et de récupération, les ressorts 2 sont comprimés, de même que les générateurs piézoélectriques 1, ce qui permet de produire un courant électrique qui peut être économiquement récupéré comme une source d'énergie pour des systèmes d'instrumentation et/ou de surveillance d'équipements de la turbomachine d'aéronef, disposés préférentiellement à proximité du groupe de lubrification.

L'usage de pompes gérotor est particulièrement avantageux dans le cadre des applications aéronautiques de l'invention. L'usage plus général d'un empilement de pompes à huile ne se départirait toutefois pas du cadre de l'invention.

En résumé, l'invention concerne un ensemble pompe (ou empilage de pompes) d'un groupe de lubrification d'une turbomachine d'aéronef comprenant :
- un empilement de pompes à huile 3 et de flasques 4 agencés autour d'un arbre 5 dans un espace intérieure à un carter 6 ;
- des moyens de compression 2 disposés entre deux des flasques 4 et configuré pour comprimer l'empilement dans l'espace intérieur au carter 6 ; et
- au moins un générateur piézoélectrique 1 au niveau des moyens de compression 2.

La présente invention a été décrite en relation avec des modes de réalisations spécifiques, qui ont une valeur purement illustrative et ne doivent pas être considérés comme limitatifs. D'une manière générale, il apparaîtra évident pour un homme du métier que la présente invention n'est pas limités aux exemples illustrés et/ou décrits ci-dessus. L'invention comprend chacune des caractéristiques nouvelles ainsi que toutes leurs combinaisons.

## Revendications

1. Ensemble pompe pour un groupe de lubrification d'une turbomachine d'aéronef comprenant :
- un arbre (5) allongé le long d'un axe (Z) ;
- un carter (6) s'étendant autour dudit arbre (5), et comprenant au moins une ouverture (61) agencée pour accueillir ledit arbre (5) ;
- une pluralité de pompes à huile (3) empilées le long dudit arbre (5), dans un espace intérieur audit carter (6),
chacune desdites pompes à huile (3) étant agencée autour dudit arbre (5) ;
- une pluralité de flasques (4) empilés le long dudit arbre (5) dans ledit espace intérieur audit carter (6),
chacun desdits flasques (4) étant agencé autour dudit arbre (5) ;
chacune desdites pompes à huile (3) étant séparée des autres pompes à huile (3) par au moins deux desdits flasques (4) disposés de part et d'autre de ladite chacune desdites pompes à huile (3) ;
- des moyens de compression (2) configurés pour comprimer un empilement constitué par lesdites pompes à huile (3) et lesdits flasques (4) dans ledit espace intérieur audit carter (6) ;
- au moins un générateur piézoélectrique (1) au niveau desdits moyens de compression (2).

2. Ensemble pompe d'un groupe de lubrification d'une turbomachine d'aéronef selon la revendication précédente, **caractérisé en ce que** :
- le carter (6) s'étend essentiellement symétriquement autour dudit arbre (5) ;
- chacune desdites pompes à huile (3) est d'une forme essentiellement annulaire agencée symétriquement autour dudit arbre (5) ;
- chacun desdits flasques (4) est d'une forme essentiellement annulaire agencée symétriquement autour dudit arbre (5).

3. Ensemble pompe selon l'une quelconque des revendications précédentes **caractérisé en ce que** lesdits moyens de compression (2) comprennent au moins un ressort ; et **en ce qu'**au moins un dudit au moins un générateur piézoélectrique (1) est agencé au niveau dudit au moins un ressort.

4. Ensemble pompe selon la revendication précédente **caractérisé en ce que** ledit au moins un ressort consiste en une pluralité de ressorts agencés symétriquement autour dudit arbre (5) entre :
- un premier desdits flasques (4) adjacent à une pompe à huile d'alimentation desdites pompes à huile (3) disposée dans une portion connexe dudit espace intérieur audit carter (6) comprenant ladite ouverture (61) ;
- un deuxième desdits flasques (4) adjacent à une pompe à huile de récupération desdites pompes à huile (3) disposée dans une autre portion connexe dudit espace intérieur ;
et **en ce que** ledit au moins un générateur piézoélectrique (1) comprend une pluralité de générateurs piézoélectrique (1), chacun desdits générateurs piézoélectriques (1) étant agencé au niveau d'un desdits ressorts (2).

5. Ensemble pompe selon l'une quelconque des revendications précédentes **caractérisé en ce que** chacune desdites pompes à huile (3) consiste en une pompe volumétrique.

6. Groupe de lubrification d'une turbomachine d'aéronef comprenant un ensemble pompe selon l'une quelconque des revendications précédentes.

7. Kit comprenant :
- un groupe de lubrification d'une turbomachine d'aéronef selon la revendication précédente ;
- un système d'instrumentation et/ou de surveillance de paramètres de fonctionnement d'un équipement de ladite turbomachine d'aéronef ;
- une connexion électrique entre ledit au moins un générateur piézoélectrique (1) et ledit système d'instrumentation et/ou de surveillance,
pour alimenter au moins partiellement ledit système d'instrumentation et/ou de surveillance en énergie électrique.

8. Kit selon la revendication précédente **caractérisé en ce que** ledit équipement consiste en ledit groupe de lubrification.

9. Kit comprenant :
- un groupe de lubrification d'une turbomachine d'aéronef selon la revendication 6 ;
- une batterie ;
- une connexion électrique entre ledit au moins un générateur piézoélectrique (1) et ladite batterie,
pour alimenter ladite batterie en énergie électrique.

10. Turbomachine d'aéronef comprenant le kit selon l'une quelconque des revendications 7 à 9.
